# EUROPEAN PATENT SPECIFICATION

(11) **EP 1 744 437 B1**
(45) Date of publication and mention of the grant of the patent: **18.05.2011**
(21) Application number: 06004483.1
(22) Date of filing: 06.03.2006
(51) Int. Cl.: H02K 3/16, H02K 19/08, H02K 21/46

(54) **Self magnetizing motor and stator thereof**
Selbstmagnetisierungsmotor und dazugehöriger Stator
Moteur auto-magnétisant et stator pour ceci

(30) Priority: 11.07.2005 KR 2005062448
(43) Date of publication of application: 17.01.2007
(73) Proprietor: LG Electronics Inc., Youngdungpo-gu Seoul (KR)
(72) Inventor: Shim, Jang-Ho, Yangcheon-gu Seoul (KR); Lee, Sung-Ho, Dongan-Gu Anyang Gyeonggi-Do (KR); Kim, Jae-Min, Dongjak-Gu Seoul (KR); Choi, Jae-Hak, Seodaemun-Gu Seoul (KR); Park, Jin-Soo, Namdong-Gu Incheon (KR)
(74) Representative: Vossius & Partner

(56) References cited:
- EP-A1- 0 189 652
- WO-A-99/43077
- GB-A- 2 026 253
- US-A- 3 891 879

## Description

The present invention relates to a self magnetizing motor and a stator thereof, and particularly, to a self magnetizing motor which is driven by an induced magnetomotive force generated by a main winding, a sub winding and a conductive bar of a rotor from its initial driving, and driven by a magnetomotive force generated by an exciter pole and an exciter magnetizing portion at a synchronous speed, and a stator thereof.

In general, a motor is a device for converting electrical energy into kinetic energy, which may be divided into a direct current (DC) motor and a alternating current (AC) motor according to power to be used.

The AC motor may include an induction motor, a synchronous motor and a commutator motor.
GB 2 026 253 describes a variable speed AC motor. EP 0 189 652 A1 describes a synchronous AC motor.

The induction motor may be classified into a single-phase induction motor and a three-phase induction motor.

The single-phase induction motor generally has a simple and firm structure, and is relatively easy to obtain a single-phase power which is widely used as a driving power of electric devices for domestic, office, industry and architecture.

The single-phase induction motor is not initiated by itself and thus the main winding and also a sub winding having a phase of current which goes 90° ahead as compared to the phase of the current applied to the main winding are provided therefor, in order to generate an initiation torque. The main and sub windings are wound on an induction slot using a particular winding method.

In the related art sing-phase induction motor, when an AC power is applied to the main winding and the sub winding wound on the induction slot at an initial driving of the single-phase induction motor, a rotating magnetic field of a stator is generated. At this time, an induced current is applied to a conductive bar of a rotor, and the rotor then starts to rotate. Here, the rotor rotates with being slipped. At this time, the current applied to the sub winding is shielded by a current cut-off device, and the current may only be applied to the main winding.

However, in the related art single-phase induction motor, because the rotor is rotated by an induction operation, the rotor may be slipped and thus an efficiency of the motor may be decreased.

Therefore, an object of the present invention is to provide a self magnetizing motor in which an end portion of an exciter pole of a stator is formed to be relatively closer to an exciter magnetizing portion than an end portion of each teeth of a stator is positioned to be close to the exciter magnetizing portion so as to increase a strength of a magnetic field, thereby improving a magnetization rate of the exciter magnetizing portion of the rotor, and a stator of the self magnetizing motor.

According to another embodiment of the present invention, there is provided a self magnetizing motor in which a rotor can rotate by a synchronous speed to thus improve an efficiency of a motor, and a stator thereof.

To achieve these and other advantages and in accordance with the purpose of the present invention, as embodied and broadly described herein, there is provided a self magnetizing motor comprising: a rotor including a rotor body, a plurality of conductive bars installed through the rotor body in an axial direction, and an exciter magnetizing portion surrounding an outer circumferential surface of the rotor body; a stator including a cavity formed in the center portion of the stator, a plurality of induction slots and a plurality of exciter slots positioned with a certain interval therebetween along an inner circumferential surface of the cavity, a teeth positioned between each induction slot, and an exciter pole positioned between each exciter slot, an end portion of the exciter pole being positioned to be relatively closer to the exciter magnetizing portion than an end portion of each teeth is positioned to be close to the exciter magnetizing portion; a winding penetrating the plurality of induction slots to be wound on the teeth; and an exciter coil penetrating the two exciter slots to be wound on the exciter pole.

The present invention is directed to improving a magnetization rate of the exciter magnetizing portion of the rotor such that the exciter pole of the self magnetizing motor, which operates as an induction motor until the rotating speed of the motor reaches a synchronous speed and operates as a permanent magnet motor after reaching the synchronous speed, can be closer to the rotor, in more detail, to the exciter magnetizing portion of the rotor.

Here, the end portion of the exciter pole adjacent to an outer circumferential surface of the rotor may preferably be formed in a tapered shape in order to prevent a magnetic flux magnetized to the exciter magnetizing portion of the rotor from being leaked from the end portion the exciter pole, to thus increase the magnetization rate.

The rotor body and the exciter pole may preferably be formed of a ferromagnetic substance having a high magnetic permeability in order to reduce a magnetic reluctance of the magnetic flux which is magnetized from the exciter pole to the exciter magnetizing portion of the rotor and to thus increase the magnetization rate. In this case, the exciter pole may preferably be constructed using a silicon steel.

The exciter magnetizing portion may preferably be formed of a magnetizable / demagnetizable material or component such as barium ferrite or barium strontium ferrite.

The conductive bar may preferably be formed of a conductor such as copper, copper alloy or aluminum in order to facilitate generating of an induced current within a magnetic field according to a law of electromagnetic induction.

The winding may preferably be composed of a main winding penetrating each of a plurality of main induction slots, and a sub winding penetrating each of a plurality of sub induction slots.

Accordingly, the main winding and the sub winding are separately provided to thus facilitate generating of a phase difference by applying an Alternating Current (AC) power having a different phase, and generating of a rotating magnetic field thereby.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Fig. 1 is an exploded perspective view illustrating a construction of a self magnetizing motor and a stator thereof in accordance with an embodiment of the present invention;
Fig. 2 is a sectional view illustrating the construction of the self magnetizing motor illustrated in Fig. 1;
Fig. 3 is a view illustrating locations of main induction slots, sub induction slots, and exciter slots in the stator of the self magnetizing motor illustrated in Fig. 1;
Fig. 4 is a partially enlarged sectional view illustrating a part A illustrated in Fig. 2; and
Fig. 5 is a graph illustrating a performance of the self magnetizing motor illustrated in Fig. 1.

Reference will now be made in detail to the preferred embodiments of the present invention, examples of which are illustrated in the accompanying drawings.

A self magnetizing motor and a stator thereof in accordance with an embodiment of the present invention will now be explained in detail with reference to the attached drawings.

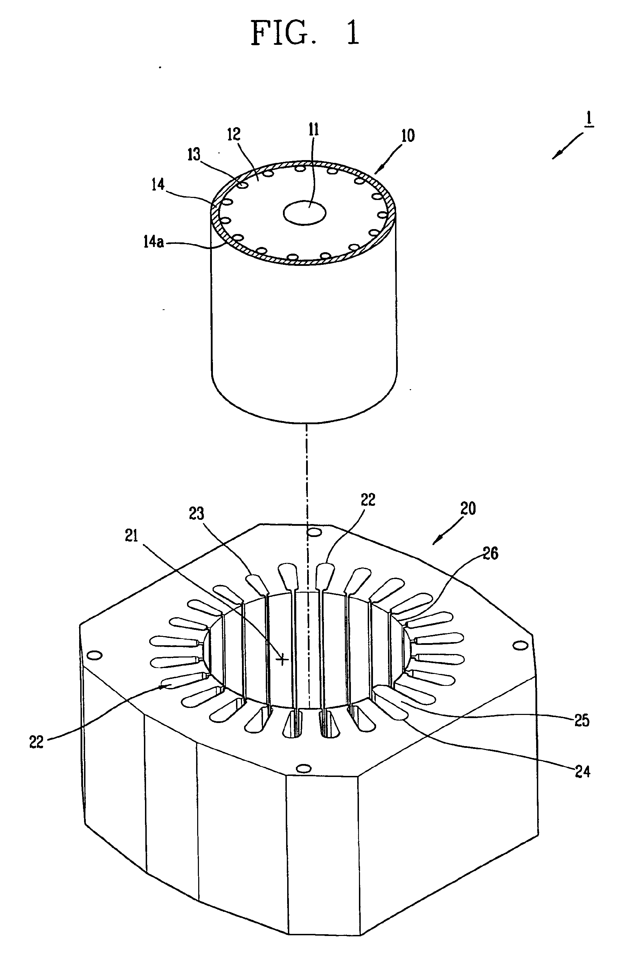

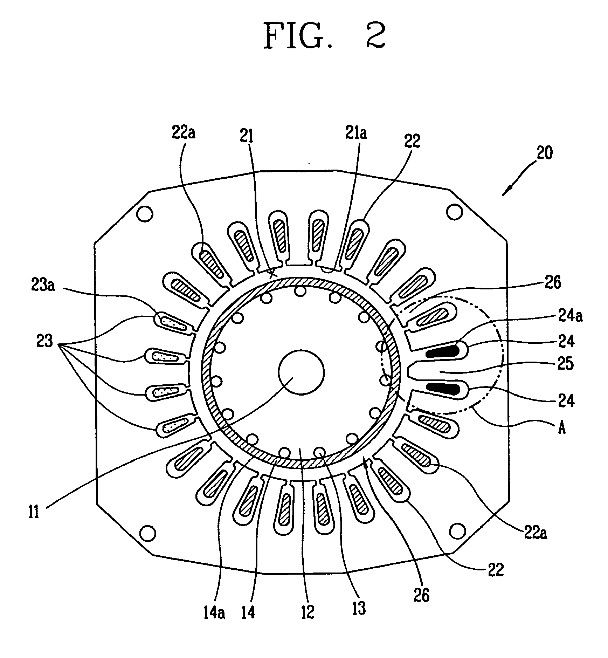

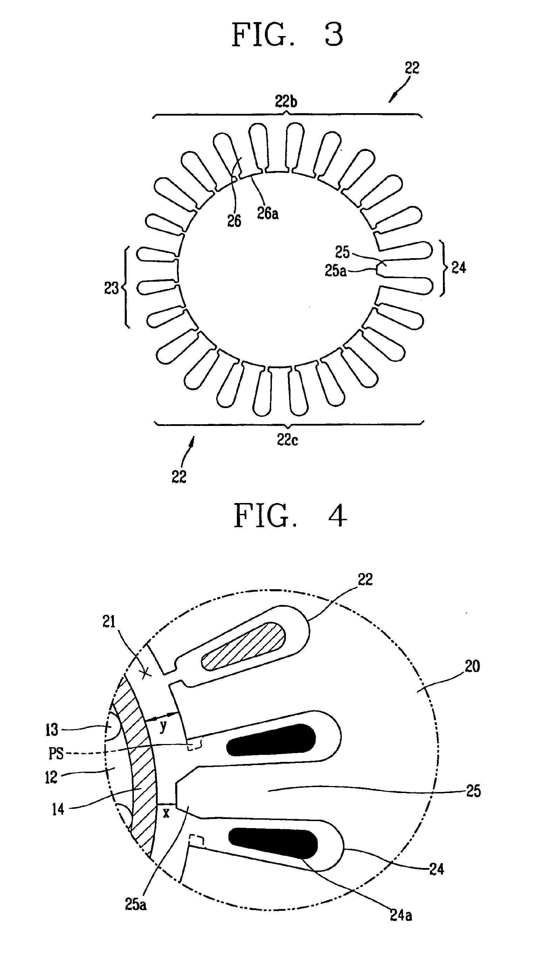

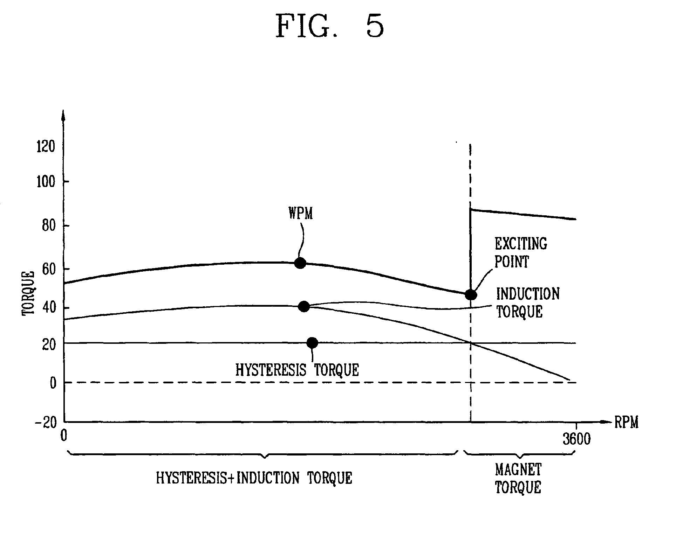

Fig. 1 is an exploded perspective view illustrating a construction of a self magnetizing motor and a stator thereof in accordance with an embodiment of the present invention; Fig. 2 is a sectional view illustrating the construction of the self magnetizing motor illustrated in Fig. 1; Fig. 3 is a view illustrating locations of main induction slots, sub induction slots, and exciter slots in the stator of the self magnetizing motor illustrated in Fig. 1; Fig. 4 is a partially enlarged sectional view illustrating a part A illustrated in Fig. 2; and Fig. 5 is a graph illustrating a performance of the self magnetizing motor illustrated in Fig. 1.

Referring to Figs. 1 and 2, a self magnetizing motor 1 according to an embodiment of the present invention may include a stator 20 having a cavity 21 in its center portion, and a rotor 10 rotatably installed in the cavity 21 and having a exciter magnetizing portion 14 at its outer circumferential surface.

The stator 20 according to the present invention may include a plurality of main induction slots 22 radially formed along an inner circumferential surface 21 a of the cavity 21 with a certain interval therebetween, sub induction slots each of which has a size smaller than that of the main induction slot 22, and two exciter slots 24 formed to face the sub induction slots 23 on the basis of the rotor 10.

A main winding 22a to which a current is applied from a AC power penetrates (is wound on) the main induction slot 22. A sub winding 23a to which the current is applied via the capacity (not shown) penetrates the sub induction slot 23. An exciter coil 24a penetrates the exciter slot 24.

Here, as illustrated in Fig. 3, the main induction slot 22 may be divided into a first group 22b and a second group 22c, which are positioned to face each other on the basis of the rotor 10.

The sub induction slots 23 are formed at one side (i.e., a left side in the drawing) between the first and second groups 22b and 22c, and the two exciter slots 24 are formed at the other side (i.e., a right side in the drawing) between the first and second groups 22b and 22c. At this time, the sub induction slots 23 and the two exciter slots 24 are positioned to face each other on the basis of the rotor 10 illustrated in Fig. 1.

Each teeth 26 is formed between each main induction slot 22 and between each sub induction slot 23. An exciter pole 25 is formed between the two exciter slots 24.

Here, an end portion 26a of each teeth 26 is aligned on the same circumference, while an end portion 25a of the exciter pole 25 protrudes inwardly to be more adjacent to the exciter magnetizing portion 14 than the end portion 26a of each teeth 26 is positioned to be close to the exciter magnetizing portion.

Accordingly, as illustrated in Fig. 4, an interval (x) between the end portion 25a of the exciter pole 25 and the exciter magnetizing portion 14 is relatively narrower than an interval (y) between the end portion 26a of each teeth 26 and the exciter magnetizing portion 14.

Here, a magnetic permeability of air is 1/3000 times as low as that of the exciter pole 25, and accordingly the magnetic reluctance of the air is great. Typically, a strength of the magnetic field is in proportional to a current I and the number of turns, and is in inversely proportional to the magnetic reluctance R. Accordingly, as the interval (x) between the end portion 25a of the exciter pole 25 and the exciter magnetizing portion 14 is narrower, the strength of the magnetic field is increased by approximately y/x, thereby increasing the magnetization rate of the exciter magnetizing portion 14.

The end portion 26a of each teeth 26 is preferably flattened, while the end portion 25a of the exciter pole 25 is preferably formed in a tapered shape.

The exciter pole 25 is preferably formed of silicon steel which is a ferromagnetic substance having a high magnetic permeability. An end part (i.e., a certain part (PS) of a so-called pole shoe) of the teeth 26 adjacent to the exciter pole 25 may preferably be removed. Accordingly, a great magnetic flux is delivered to the exciter magnetizing portion 14 of the rotor 10 without any great loss of the magnetic flux to thus magnetize the exciter magnetizing portion 14.

The rotor 10 may include a cylindrical rotor body 12 which a rotating shaft 11 penetrates, a plurality of conductive bars 13 formed through portions adjacent to an outer circumferential surface of the rotor body 12, the conductive bar 13 being in parallel with the rotating shaft 11, and the exciter magnetizing portion 14 surrounding the outer circumferential surface of the rotor body 12.

An operational principle of the self magnetizing motor according to the present invention having such construction will now be explained.

Upon applying an AC power to the main winding 22a and the sub winding 23a of the self magnetizing motor 1, the sub winding 23a having a current phase going 90° ahead of that of the main winding 22a, an induced current is generated on the conductive bar 13 of the rotor 10 according to a law of electromagnetic induction. The conductive bar 13 receives a force within the magnetic field generated by the sub winding 23a. Accordingly, the rotor 10 starts to rotate.

Here, after initially being driven, the rotor 10 rotates with being slipped. The current applied to the sub winding 23a is shielded by a current cut-off device, and the current may only be applied to the main winding 22a.

In the step in which the rotor 10 rotates, an effect in which the exciter magnetizing portion 14 is magnetized with a low density by the rotating magnetic field of the stator 20, namely, a hystheresis effect is generated. As a result, rotor 10 rotates by the hystheresis effect and the induction torque by the aforementioned induced current.

When the rotor 10 rotates and thus its rotating speed is 2,520 to 2,880 rpm which corresponds to about 70 to 80% of the synchronous speed, upon applying the AC power to the exciter slot 24, a magnetic flux generated by the exciter pole 25 is delivered to the exciter magnetizing portion 14, so that the exciter magnetizing portion 14 can be magnetized with the low density.

As the exciter magnetizing portion 14 is magnetized with the low density, the rotor 10 can rotate at the synchronous speed of the rotating magnetic field without being slipped. At this time, the current may not be applied to the conductive bar 13.

The self magnetizing motor 1 according to the present invention may undergo two steps of rotating, in which, as illustrated in Fig. 5, the rotor 10 thereof rotates according to both the induction torque and the hysteresis torque at a step of a low speed, and then enters into a step of high speed by allowing the exciter pole 25 (see Fig. 2) to magnetize the exciter magnetizing portion 14 (see Fig. 2) to thus rotate according to a torque generated in the exciter magnetizing portion 14.

Here, the current may be applied via the exciter coil 24a only at the moment of magnetizing the exciter magnetizing portion 14, and thus the rotor 10 can rotate by the synchronous speed of the rotating magnetic field without being slipped, thereby improving an efficiency of the motor.

As described above, in the present invention, the end portion of the exciter pole of the stator is formed to be relatively more adjacent to the rotor, in more detail, to the exciter magnetizing portion than the end portion of each teeth of the stator is, and thus the strength of the magnetic field is increased to thus drastically improve the magnetization rate of the exciter magnetizing portion.

Also, the current is applied via the exciter coil only at the moment of magnetizing the exciter magnetizing portion to thus rotate the rotor by the synchronous speed of the rotating magnetic field, and accordingly the efficiency of the motor can be improved.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A self magnetizing motor (1) comprising:
a rotor (10) including a rotor body, a plurality of conductive bars (13) installed through the rotor body in an axial direction, and an exciter magnetizing portion (14) surrounding an outer circumferential surface of the rotor body;
a stator (20) including a cavity formed in its center portion to install the rotor (10) therein, a plurality of induction slots (22) and a plurality of exciter slots (24) positioned with a certain interval therebetween along an inner circumferential surface of the cavity, a tooth (26) positioned between each induction slot (22), and an exciter pole (25) positioned between each exciter slot (24),
a winding penetrating each of the plurality of induction slots (22) to be wound on each tooth; and
an exciter coil (24a) penetrating each of the plurality of exciter slots (24) to be wound on the exciter pole;
**characterised in that**
an end portion (25a) of the exciter pole (25) is positioned close to the exciter magnetizing portion (14) to be relatively closer to the exciter magnetizing portion (14) than an end portion (26a) of each tooth (26).

2. The motor of claim 1, wherein the plurality of exciter slots (24) are two.

3. The motor of claim 1 or 2, wherein an interval (X) between an outer circumferential surface of the exciter magnetizing portion (14) and the end portion (25a) of the exciter pole (25) is formed to be relatively narrower than an interval between the outer circumferential surface of the exciter magnetizing portion (14) and the end portion of each tooth (26).

4. The motor of claims 1 to 3, wherein the end portion (25a) of the exciter pole (25) has a tapered shape.

5. The motor of any of claims 1 to 4, wherein the rotor body is formed of a ferromagnetic substance having a high magnetic permeability.

6. The motor of any of claims 1 to 5, wherein the winding includes a main winding (22a) penetrating each of the plurality of main induction slots, and a sub winding (23a) penetrating each of the plurality of sub induction slots (23).

## Patentansprüche

1. Selbstmagnetisierender Motor (1), der aufweist:
einen Rotor (10), der einen Rotorkörper, mehrere leitfähige Stäbe (13), die in eine axiale Richtung durch den Rotorkörper eingebaut sind, und einen Erregermagnetisierungsabschnitt (14) aufweist, der eine Außenumfangsfläche des Rotorkörpers umgibt;
einen Stator (20), der einen in seinem Mittenabschnitt ausgebildeten Hohlraum zum Einbau des Rotors (10) darin, mehrere Induktionsschlitze (22) und mehrere Erregerschlitze (24), die mit einem bestimmten Abstand dazwischen längs einer Innenumfangsfläche des Hohlraums angeordnet sind, einen Zahn (26), der zwischen jedem Induktionsschlitz (22) angeordnet ist, und einen Erregerpol (25) aufweist, der zwischen jedem Erregerschlitz (24) angeordnet ist,
eine Wicklung, die jeden der mehreren Induktionsschlitze (22) durchdringt, so dass sie auf jeden Zahn gewickelt ist; und
eine Erregerwicklung (24a), die jeden der mehreren Erregerschlitze (24) durchdringt, so dass sie auf den Erregerpol gewickelt ist;
**dadurch gekennzeichnet, dass**
ein Endabschnitt (25a) des Erregerpols (25) nahe des Erregermagnetisierungsabschnitts (14) so angeordnet ist, dass er dem Erregermagnetisierungsabschnitt verhältnismäßig näher als ein Endabschnitt (26a) jedes Zahns (26) liegt.

2. Motor nach Anspruch 1, wobei die mehreren Erregerschlitze (24) zwei sind.

3. Motor nach Anspruch 1 oder 2, wobei ein Abstand (X) zwischen einer Außenumfangsfläche des Erregermagnetisierungsabschnitts (14) und dem Endabschnitt (25a) des Erregerpols (25) so ausgebildet ist, dass er verhältnismäßig enger als ein Abstand zwischen der Außenumfangsfläche des Erregermagnetisierungsabschnitts (14) und dem Endabschnitt jedes Zahns (26) ist.

4. Motor nach Anspruch 1 bis 3, wobei der Endabschnitt (25a) des Erregerpols (25) eine verjüngte Form aufweist.

5. Motor nach einem der Ansprüche 1 bis 4, wobei der Rotorkörper aus einer ferromagnetischen Substanz mit einer hohen magnetischen Permeabilität ausgebildet ist.

6. Motor nach einem der Ansprüche 1 bis 5, wobei die Wicklung eine Hauptwicklung (22a), die jeden der mehreren Hauptinduktionsschlitze durchdringt, und eine Hilfswicklung (23a) aufweist, die jeden der mehreren Hilfsinduktionsschlitze (23) durchdringt.

## Revendications

1. Moteur à automagnétisation (1) comprenant :
un rotor (10) présentant un corps de rotor, une pluralité de barres conductrices (13) traversant le corps de rotor en direction axiale, et une partie d'excitation magnétisable (14) entourant une surface circonférentielle extérieure du corps de rotor ;
un stator (20) présentant une cavité formée dans sa partie centrale pour recevoir le rotor (10), une pluralité de fentes d'induction (22) et une pluralité de fentes d'excitation (24) disposées avec un espacement défini entre elles sur une surface circonférentielle intérieure de la cavité, une dent (26) disposée entre chaque fente d'induction (22) et un pôle d'excitation (25) disposé entre chaque fente d'excitation (24),
un enroulement introduit dans chaque fente de la pluralité de fentes d'induction (22) pour être enroulé sur chaque dent ; et
une bobine d'excitation (24a) introduite dans chaque fente de la pluralité de fentes d'excitation (24) pour être enroulée sur le pôle d'excitation ;
**caractérisé**
**en ce qu'**une partie d'extrémité (25a) du pôle d'excitation (25) est disposée à proximité de la partie d'excitation magnétisable (14) de manière à être relativement plus proche de la partie d'excitation magnétisable (14) qu'une partie d'extrémité (26a) de chaque dent (26).

2. Moteur selon la revendication 1, où la pluralité de fentes d'excitation (24) se compose de deux fentes d'excitation.

3. Moteur selon la revendication 1 ou la revendication 2, où un intervalle (X) est prévu entre une surface circonférentielle extérieure de la partie d'excitation magnétisable (14) et la partie d'extrémité (25a) du pôle d'excitation (25) de manière à être relativement plus étroit qu'un intervalle entre la surface circonférentielle extérieure de la partie d'excitation magnétisable (14) et la partie d'extrémité de chaque dent (26).

4. Moteur selon les revendications 1 à 3, où la partie d'extrémité (25a) du pôle d'excitation (25) a une forme chanfreinée.

5. Moteur selon l'une quelconque des revendications 1 à 4, où le corps de rotor est constitué d'une matière ferromagnétique présentant une perméabilité magnétique élevée.

6. Moteur selon l'une quelconque des revendications 1 à 5, où l'enroulement comprend un enroulement principal (22a) introduit dans chaque fente de la pluralité des fentes d'induction principales, et un enroulement secondaire (23a) introduit dans chaque fente de la pluralité des fentes d'induction secondaires (23).
